Europäisches Patentamt

European Patent Office

Office européen des brevets

(19)

(11)  **EP 1 489 723 A1**

(12)  **EUROPÄISCHE PATENTANMELDUNG**

(43) Veröffentlichungstag:
**22.12.2004 Patentblatt 2004/52**

(51) Int Cl.⁷: **H02K 3/28**

(21) Anmeldenummer: **04008836.1**

(22) Anmeldetag: **14.04.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **20.06.2003 DE 10327689**

(71) Anmelder: **ROBERT BOSCH GMBH**
**70442 Stuttgart (DE)**

(72) Erfinder:
• **Rechberger, Klaus**
**76138 Ludwigsburg (DE)**
• **Wolf, Gert**
**71563 Affalterbach (DE)**

(54)  **Generator mit B12-Gleichrichter für ein Kraftfahrzeug**

(57)  Die Erfindung betrifft einen sechsphasigen Generator für ein Kraftfahrzeug, mit zwei um 30° elektrisch gegeneinander verschobenen Dreiphasensystemen, wobei die Phasenwicklungen eines der Dreiphasensysteme in einer Sternschaltung und die Phasenwicklungen des anderen Dreiphasensystems in einer Dreieckschaltung angeordnet sind.

FIG 2

EP 1 489 723 A1

## Beschreibung

Die Erfindung betrifft einen Generator für ein Kraftfahrzeug.

Stand der Technik

Es ist bereits bekannt, Kraftfahrzeuggeneratoren als Dreiphasenmaschinen mit einem B6-Brückengleichrichter zu realisieren. Die Phasenwicklungen einer Dreiphasenmaschine sind in einer Sternschaltung geschaltet. Beträgt die Polpaarzahl p = 8, dann berechnet sich die Zahl n der Nuten des Stators wie folgt:

$$n = 2 \times p \times 3 \text{ Phasen} = 48.$$

Weiterhin ist bereits ein von der Firma Denso vertriebener Generator bekannt, bei dem es sich um einen Generator mit einem echten Sechsphasensystem und einem B12-Brückengleichrichter handelt. Der Vorteil dieses bekannten Generators besteht in einer Geräuschreduktion und einer nach der Gleichrichtung vorliegenden reduzierten Spannungswelligkeit. Dieses Sechsphasensystem erfordert im Vergleich zu bekannten, als Dreiphasenmaschinen realisierten Generatoren die doppelte Anzahl von Nuten im Stator. Beträgt die Polpaarzahl des Generators mit Sechsphasensystem p = 8 und werden die sechs Phasen mittels einer Doppelsternschaltung realisiert, dann berechnet sich die Zahl n der Nuten des Stators wie folgt:

$$n = 2 \times p \times 6 \text{ Phasen} = 96.$$

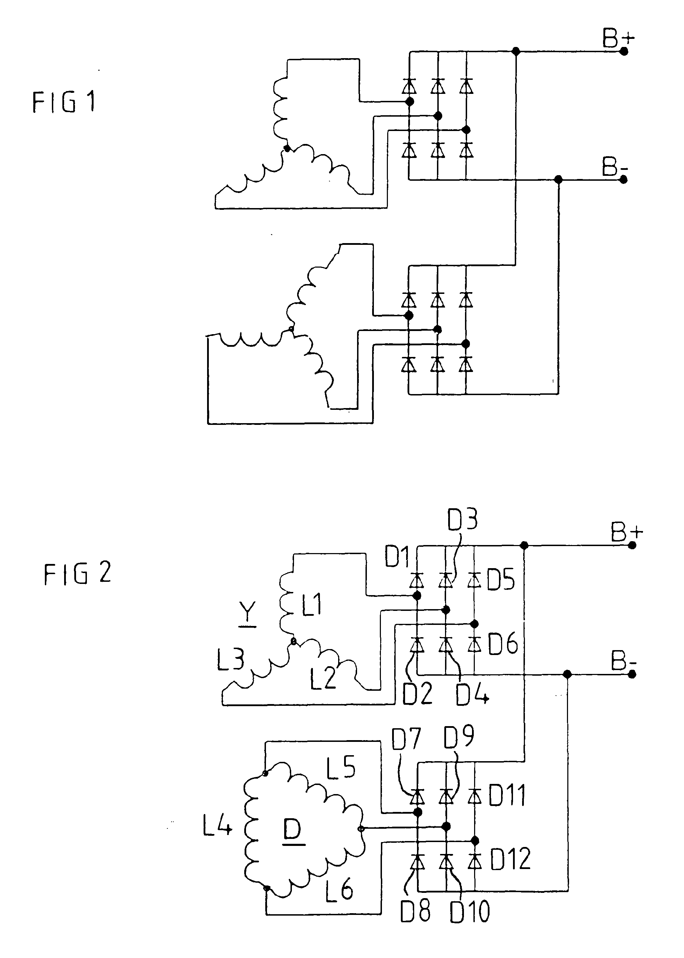

Ein Generator mit Sechsphasensystem ist in der Figur 1 dargestellt. Die Phasenwicklungen dieses Systems sind in unterschiedlichen Nuten untergebracht. Der dargestellte Generator weist zwei parallel zueinander angeordnete, jeweils dreiphasige Sternschaltungen auf, die jeweils mit einem B6-Brückengleichrichter verbunden sind. Die Plus-Ausgänge der beiden B6-Brückegleichrichter sind zusammengeführt und bilden einen Ausgang B+. Die Minus-Ausgänge der beiden B6-Brückengleichrichter sind ebenfalls zusammengeführt und bilden einen Ausgang B-. Die Phasenverschiebung zwischen den beiden Sternschaltungen beträgt 30°. Folglich ist der Generator aus zwei Dreiphasensystemen zusammengesetzt, die jeweils eine dreiphasige Sternschaltung bilden, wobei zwischen den beiden Sternschaltungen eine Phasenverschiebung von 30° vorliegt.

Vorteile der Erfindung

Ein Generator gemäß der Erfindung ermöglicht eine 12-pulsige Gleichrichtung unter Verwendung von zwei Dreiphasensystemen, wobei die Wicklungen eines der drei Phasensysteme in Sternschaltung und die Wicklungen des anderen Dreiphasensystems in einer Dreieckschaltung angeordnet sind. Dadurch wird die Anzahl der notwendigen Nuten im Stator im Vergleich zu bekannten Dreiphasensystemen nicht erhöht, da die Strangwicklungen in die jeweils gleichen Nuten gelegt und nur unterschiedlich verschaltet werden. Dennoch bildet ein Generator gemäß der Erfindung ein Sechsphasensystem mit einem B12-Gleichrichter.

Durch die erfindungsgemäße Kombination einer Sternschaltung mit einer Dreieckschaltung entstehen zwei Dreiphasensysteme, die gegeneinander elektrisch um 30° versetzt sind. Durch die Kombination jedes der beiden Dreiphasensysteme mit einem B6-Brückengleichrichter entsteht eine 12-pulsige Gleichspannung, die im Vergleich zu bekannten Dreiphasensystemen eine verringerte Spannungswelligkeit aufweist. Weiterhin sind bei einem Generator mit den erfindungsgemäßen Merkmalen im Vergleich zu bekannten Dreiphasensystemen die auftretenden Störgeräusche reduziert.

Weitere vorteilhafte Eigenschaften der Erfindung ergeben sich aus deren beispielhafter Erläuterung anhand der Figuren.

Zeichnung

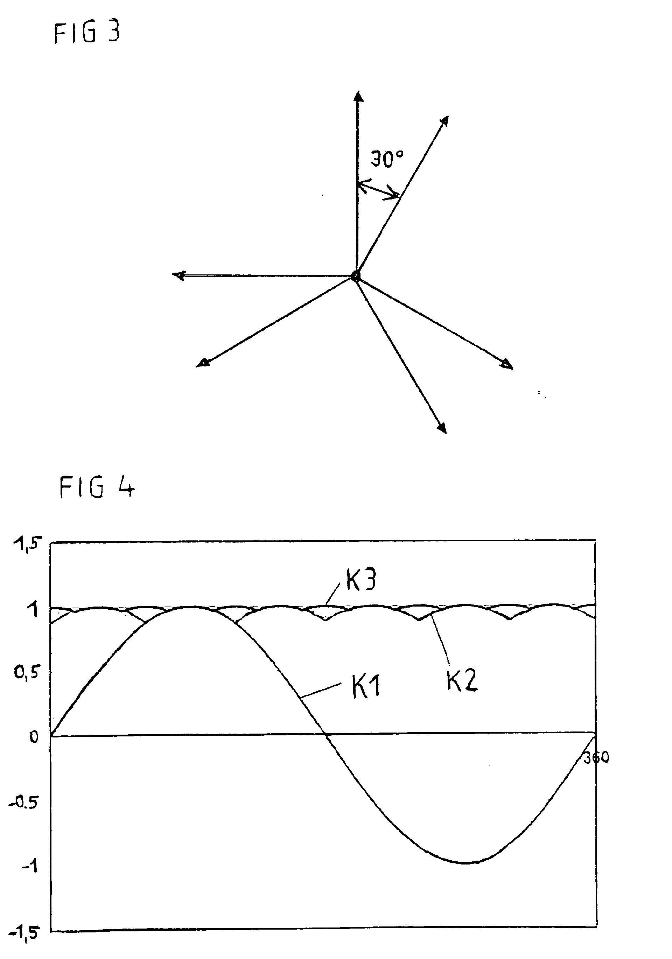

Die Figur 1 zeigt einen Generator mit einem Sechsphasensystem und einem B12-Brückengleichrichter gemäß dem Stand der Technik. Die Figur 2 zeigt einen Generator mit einem Sechsphasensystem und einem B12-Brückengleichrichter gemäß der Erfindung. Die Figur 3 veranschaulicht die bei einem Generator gemäß der Figur 3 auftretenden Phasenspannungen. Die Figur 4 veranschaulicht die Welligkeit der Ausgangsspannung eines erfindungsgemäßen Generators mir B12-Gleichrichtung im Vergleich zu einem bekannten Generator mit B6-Gleichrichtung.

Beschreibung

Die Figur 2 zeigt einen Generator mit einem Sechsphasensystem und einem B12-Brückengleichrichter gemäß der Erfindung. Das Sechsphasensystem weist ein erstes Dreiphasensystem Y und ein zweites Dreiphasensystem D auf.

Das erste Dreiphasensystem Y weist in Sternschaltung geschaltete Phasenwicklungen L1, L2 und L3 auf. Der vom Sternpunkt der Sternschaltung abgelegene Anschluss der Phasenwicklung L1 ist an einen zwischen der Anode einer Diode D1 und der Kathode einer Anode D2 gelegenen Verbindungspunkt angeschlossen. Der vom Sternpunkt der Sternschaltung abgelegene Anschluss der Phasenwicklung L2 ist an einen zwischen der Anode einer Diode D3 und der Kathode einer Diode D4 gelegenen Verbindungspunkt angeschlossen. Der vom Sternpunkt der Sternschaltung abgelegene Anschluss der Phasenwicklung L3 ist an einen zwischen der Anode der Diode D5 und der Kathode der Diode D6 gelegenen Verbindungspunkt angeschlossen. Die Kathoden der Dioden D1, D3 und D5 sind zusammengeführt und mit dem Ausgang B+ der dargestellten Vorrichtung verbunden. Die Anoden der Dioden D2, D4 und D6 sind ebenfalls zusammengeführt und mit dem Ausgang B- der dargestellten Vorrichtung verbunden. Die Dioden B1 - D6 bilden einen B6-Gleichrichter für die vom ersten Dreiphasensystem $\underline{Y}$ zur Verfügung gestellten, um jeweils 120° zueinander versetzten Phasenströme.

Das zweite Dreiphasensystem $\underline{D}$ weist in einer Dreieckschaltung vorgesehene Phasenwicklungen L4, L5 und L6 auf. Der zwischen den Phasenwicklungen L4 und L5 gelegene Anschluss der Dreieckschaltung ist an einen zwischen der Anode einer Diode D7 und der Kathode einer Diode D8 gelegenen Verbindungspunkt angeschlossen. Der zwischen den Phasenwicklungen L5 und L6 gelegene Anschluss der Dreieckschaltung ist an einen zwischen der Anode einer Diode D9 und der Kathode einer Diode D10 gelegenen Verbindungspunkt angeschlossen. Der zwischen den Phasenwicklungen L4 und L6 gelegene Anschluss der Dreieckschaltung ist an einen zwischen der Anode einer Diode D11 und der Kathode einer Diode D12 gelegenen Verbindungspunkt angeschlossen. Die Kathoden der Dioden D7, D9 und D11 sind zusammengeführt und mit dem Ausgang B+ der dargestellten Vorrichtung verbunden. Die Anoden der Dioden D8, D10 und D12 sind ebenfalls zusammengeführt und mit dem Ausgang B- der dargestellten Vorrichtung verbunden. Die Dioden D7 - D12 bilden einen B6-Gleichrichter für die vom zweiten Dreiphasensystem $\underline{D}$ zur Verfügung gestellten, um jeweils 120° zueinander versetzten Phasenströme.

Wie aus der Figur 3 hervorgeht, sind die von der Sternschaltung zur Verfügung gestellten Phasenspannungen, deren Phasenlagen jeweils mit $\varphi_Y$ bezeichnet sind, zu den von der Dreieckschaltung zur Verfügung gestellten Phasenspannungen, deren Phasenlagen jeweils mit $\varphi_D$ bezeichnet sind, um 30° elektrisch versetzt.

Durch die in der Figur 2 dargestellte Kombination von zwei B6-Brückengleichrichtern entsteht aus den vom Generator zur Verfügung gestellten Phasenspannungen eine zwölfpulsige Gleichspannung. Diese weist im Vergleich zu Gleichspannungen, die mittels eines Dreiphasengenerators mit einem B6-Brückengleichrichter generiert wurden, eine verringerte Welligkeit auf.

Dies ist in der Figur 4 veranschaulicht. Dort ist längs der Abszisse der elektrische Winkel und längs der Ordinate die Spannung aufgetragen. Die Kurve K1 entspricht einer vollständigen Periode der Wechselspannung. Die Kurve K2 zeigt die Ausgangsgleichspannung, die von einem B6-Gleichrichter zur Verfügung gestellt wird. Die Kurve K3 zeigt die Ausgangsgleichspannung, wie sie von einem B12-Gleichrichter gemäß der Erfindung zur Verfügung gestellt wird. Die von einem B6-Gleichrichter zur Verfügung gestellte Ausgangsspannung weist eine Welligkeit von 4,2% auf, die von einem B12-Gleichrichter zur Verfügung gestellte Ausgangsspannung hingegen nur eine Welligkeit von 1,04%. Unter Welligkeit versteht man dabei das Verhältnis zwischen dem Effektivwert der überlagerten Wechselspannung und dem Gleichspannungsmittelwert.

Bei einem Generator gemäß der Erfindung können die den beiden Dreiphasensystemen zugehörigen Phasenwicklungen jeweils in denselben Nuten des Stators untergebracht werden. Dabei müssen die Windungszahlen und die Drahtquerschnitte der Phasenwicklungen der Sternschaltung und der Dreieckschaltung aufeinander abgestimmt werden.

Mögliche Kombinationen für die Windungszahlen pro Polpaar in einem Generator sind:

| Sternschaltung | Dreieckschaltung |
|---|---|
| 3 | 5 |
| 4 | 7 |
| 6 | 10 |

Die vorstehend angegebenen Windungszahlen der Sternschaltung und der Dreiecksschaltung unterscheiden sich um einen Faktor, der 1,73 beträgt.

Dies bedeutet, dass anstelle einer bei bekannten Dreieckschaltungen vorgesehenen Schaltung mit 5 Leitern pro Nut, wobei jeder dieser Leiter zwei parallel geschaltete Drähte aufweist, nunmehr in eine Nut für die Dreieckschaltung eine Schaltung mit 5 Leitern, wobei jeder dieser Leiter nur einen Draht aufweist, und zusätzlich für die Sternschaltung drei Leiter, wobei jeder dieser Leiter ebenfalls nur einen Draht aufweist, eingelegt werden kann.

Die Verschaltung der Spulen erfolgt entweder auf dem Wickelkopf oder auf dem Gleichrichter, der aus zwei B6-Brückenschaltungen besteht. Die beiden Systeme sind auf der Gleichstromseite miteinander verbunden. Da das Windungszahlverhältnis nicht genau eine ganze Zahl ist, kommt es im Betrieb zu geringfügig ungleichen Belastungen der Dreieck- und der Sternschaltung. Dieser Umstand muss bei der Wicklungsauslegung berücksichtigt werden, insbesondere durch eine geeignete Wahl der Drahtquerschnitte der Wicklungen.

Wie aus der Figur 2 ersichtlich ist, enthält der dort gezeigte Gleichrichter insgesamt 12 Gleichrichterdioden. Dies stellt keinen Nachteil gegenüber herkömmlichen Hochleistungsgeneratoren dar, da bei Hochleistungsgeneratoren zwei Paralleldioden pro Brückenzweig eingesetzt werden, d. h. insgesamt 6 x 2 = 12 Dioden, um die erforderliche Stromtragfähigkeit zu erhalten.

Ein wesentlicher Vorteil eines Generators gemäß der Erfindung besteht darin, dass die Vorteile einer B12-Gleichrichterschaltung genutzt werden können, ohne dass die Zahl der erforderlichen Nuten des Stators gegenüber einer Maschine mit B6-Gleichrichter erhöht werden muss. Weiterhin hat ein Generator gemäß der Erfindung auch die Vorteile einer verringerten Welligkeit der vom Gleichrichter zur Verfügung gestellten Ausgangsspannung und eines reduzierten Störgeräusches.

**Patentansprüche**

1. Sechsphasiger Generator für ein Kraftfahrzeug, mit zwei gegeneinander verschobenen Dreiphasensystemen, wobei die Phasenwicklungen (L1,L2,L3) eines der Dreiphasensysteme in einer Sternschaltung (Y) und die Phasenwicklungen (L4,L5,L6) des anderen Dreiphasensystems in einer Dreieckschaltung (D) angeordnet sind.

2. Generator nach Anspruch 1, **dadurch gekennzeichnet, dass** den Dreiphasensystemen jeweils eine B6-Gleichrichterbrücke (D1-D6;D7-D12) nachgeschaltet ist.

3. Generator nach Anspruch 2, **dadurch gekennzeichnet, dass** die beiden B6-Gleichrichterbrücken auf ihren Gleichspannungsseiten (B+,B-) miteinander verbunden sind.

4. Generator nach einem der vorhergehenden Ansprüche, **dadurch gekennzeichnet, dass** in einer Nut des Stators des Generators Phasenwicklungen angeordnet sind, von denen eine der Sternschaltung und die andere der Dreieckschaltung zugehörig ist.

5. Generator nach einem der vorhergehenden Ansprüche, **dadurch gekennzeichnet, dass** die Windungszahlen und die Drahtquerschnitte der Phasenwicklungen der Sternschaltung und der Dreieckschaltung aufeinander abgestimmt sind.

6. Generator nach einem der vorhergehenden Ansprüche, **dadurch gekennzeichnet, dass** die Verschaltung der Phasenwicklungen auf dem Wickelkopf oder auf den Gleichrichterbrücken vorgesehen ist.

FIG 1

FIG 2

FIG 3

30°

FIG 4

1,5

K3

1

K2

0,5

K1

0

360

-0,5

-1

-1,5

| | Europäisches Patentamt | EUROPÄISCHER RECHERCHENBERICHT | Nummer der Anmeldung EP 04 00 8836 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 737 063 A (VALEO EQUIP ELECTR MOTEUR) 24. Januar 1997 (1997-01-24) * das ganze Dokument * ----- | 1-6 | H02K3/28 |
| X | US 5 274 322 A (HAYASHI SEIJI ET AL) 28. Dezember 1993 (1993-12-28) * das ganze Dokument * ----- | 1-6 | |
| X | US 4 163 187 A (THOMAS SERGE J H) 31. Juli 1979 (1979-07-31) * Abbildung 8 * ----- | 1 | |
| | | | **RECHERCHIERTE SACHGEBIETE (Int.Cl.7)** H02K |

Der vorliegende Recherchenbericht wurde für alle Patentansprüche erstellt

| Recherchenort | Abschlußdatum der Recherche | Prüfer |
|---|---|---|
| Den Haag | 8. September 2004 | Le Chenadec, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**     EP 04 00 8836

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-09-2004

| Im Recherchenbericht angeführtes Patentdokument | | Datum der Veröffentlichung | Mitglied(er) der Patentfamilie | | Datum der Veröffentlichung |
|---|---|---|---|---|---|
| FR 2737063 | A | 24-01-1997 | FR | 2737063 A1 | 24-01-1997 |
| US 5274322 | A | 28-12-1993 | JP | 2833159 B2 | 09-12-1998 |
| | | | JP | 4042759 A | 13-02-1992 |
| US 4163187 | A | 31-07-1979 | FR | 2297513 A1 | 06-08-1976 |
| | | | BR | 7600032 A | 03-08-1976 |
| | | | CA | 1081776 A1 | 15-07-1980 |
| | | | CA | 1112298 A2 | 10-11-1981 |
| | | | DE | 2600035 A1 | 15-07-1976 |
| | | | DE | 2660017 B1 | 15-03-1979 |
| | | | ES | 444161 A1 | 01-08-1977 |
| | | | GB | 1513270 A | 07-06-1978 |
| | | | IT | 1052906 B | 31-08-1981 |
| | | | JP | 51095209 A | 20-08-1976 |
| | | | JP | 56171570 U | 18-12-1981 |
| | | | SE | 419922 B | 31-08-1981 |
| | | | SE | 7513983 A | 12-07-1976 |
| | | | ZA | 7600124 A | 30-11-1977 |

EPO FORM P0461

Für nähere Einzelheiten zu diesem Anhang : siehe Amtsblatt des Europäischen Patentamts, Nr.12/82